Europäisches Patentamt

European Patent Office

Office européen des brevets

(19)

(11) Veröffentlichungsnummer: **0 154 607**
**B1**

(12) **EUROPÄISCHE PATENTSCHRIFT**

(45) Veröffentlichungstag der Patentschrift: 22.08.90

(51) Int. Cl.⁵: **B 23 Q 1/02,** B 23 Q 1/16,
B 23 Q 11/10

(21) Anmeldenummer: 85810098.5

(22) Anmeldetag: 07.03.85

(54) Einrichtung zur Halterung eines Gegenstandes in einer räumlichen Lage.

(30) Priorität: 09.03.84 CH 1185/84

(43) Veröffentlichungstag der Anmeldung:
11.09.85 Patentblatt 85/37

(45) Bekanntmachung des Hinweises auf die
Patenterteilung:
22.08.90 Patentblatt 90/34

(84) Benannte Vertragsstaaten:
CH DE FR GB IT LI SE

(56) Entgegenhaltungen:
EP-A-0 060 652      US-A-2 111 299
EP-A-0 116 260      US-A-3 498 685
CH-A- 652 061       US-A-3 726 363
DE-B-2 726 731      US-A-3 893 355
DE-U-8 408 669      US-A-4 020 742
FR-A-1 020 227      US-A-4 341 020
GB-A-1 217 741

IBM TECHNICAL DISCLOSURE BULLETIN, Band
26, Nr. 1, Juni 1983, Seiten 130-132, New York,
US; D.M. BERNER et al: "Biaxial rotary table test
fixtures"

(73) Patentinhaber: Büchler B-SET AG
Wiler Strasse 98
CH-9230 Flawil (CH)

(72) Erfinder: Büchler, René
Weidweg 2
CH-9245 Sonnental (SG) (CH)

(74) Vertreter: EGLI-EUROPEAN PATENT
ATTORNEYS
Horneggstrasse 4
CH-8008 Zürich (CH)

(56) Entgegenhaltungen:
TECHNISCHE RUNDSCHAU, Band 70, Nr. 16,
April 1978, Seiten 42, 43, Bern, CH; K. HAUSER:
"Elektroniche Messwertanzeige"

PATENT ABSTRACTS OF JAPAN, Band 7, Nr.
128 (M-220) (1273), 3. Juni 1983; & JP-A-5845821
(MITSUBISHI DENKI K.K.) 17-03-1983

PATENT ABSTRACTS OF JAPAN, Band 9, Nr.
152 (M-391) (1875), 27. Juni 1985; & JP-A-
6029245 (MITSUBISHI DENKI K.K.) 14-02-1985

# EP 0 154 607 B1

(56) Entgegenhaltungen:

**PATENT ABSTRACTS OF JAPAN, Band 5, Nr.
193 (M-101) (865), 9. Dezember 1981; & JP-A-
56114624 (SODEITSUKU K.K.) 09-09-1981**

**Beschreibung**

Die vorliegende Erfindung betrifft eine Einrichtung zur Halterung eines Gegenstandes in einer räumlichen Lage, mit einer Palette, auf welcher der Gegenstand befestigbar ist und mit einem Paletten-Voreinstellgefüge mit dessen Hilfe sich die Palette samt dem Gegenstand in eine gewünschte Lage bringen lässt.

Einrichtungen der vorgenannten Art sind bereits bekannt. Das zu bearbeitende Werkstück, das sich auf der Palette befindet, kann auf einem Voreinstellplatz in die für seine Bearbeitung erforderliche Lage gebracht werden. Dann wird das Werkstück samt der Palette unter der Einhaltung seiner eingestellten Lage in den Arbeitsbereich der Maschine eingeführt.

Aus US—A—4341020 (Bailey) ist eine Halterung für Werkstücke gemäß dem Oberbegriff der Anspruchs 1 bekannt, die aus drei Platten besteht, von denen je zwei jeweils mit Hilfe eines scharnierartigen Gelenkes verbunden sind. Mit dieser Halterung kann eine beliebige räumliche Lage des Werkstücks erreicht werden. Die oberste Platte ist nach einem bestimmten Muster mit Bohrungen zur Befestigung eines Werkstückes versehen. Anstelle des Werkstückes kann auch eine drehbare Spannvorrichtung montiert werden, was zusätzliche Positionierungsmöglichkeiten ergibt. Es ist aber keine Möglichkeit zur Kühlung weder der Halterung noch des Werkstückes vorgesehen.

Aufgabe der vorliegenden Erfindung ist es, eine Halterungseinrichtung der eingangs genannten. Art zu schaffen, bei der dieser Nachteil nicht auftritt.

Zur Lösung dieser Aufgabe wird eine Einrichtung der eingangs genannten Art vorgeschlagen, die gekennzeichnet ist durch die im Anspruch 1 angegebene Kombination von Merkmalen. Vorteilhafte Ausbildungen der Einrichtung ergeben sich aus den Ansprüchen 2 bis 10.

Gemäß einer Ausgestaltung der erfindungsgemässen Einrichtung lässt diese sich wie ein gefalzter Gegenstand entfalten bzw. wie ein Buch aufschlagen, derart, dass sich die horizontalen Richtungen X und Y der Palette nacheinander in die vertikale Richtung bringen lassen. Das an der Palette angeordnete Werkstück lässt sich dann mit Hilfe einer vertikalen Messeinrichtung ausrichten, und die vertikal vorgenommene Ausrichtung ergibt nach dem Zurückfalten der erfindungsgemassen Einrichtung eine Ausrichtung in der horizontalen Richtung X bzw. Y.

Ausserdem sind in den aufeinander faltbaren Teilen der erfindungsgemässen Einrichtung Kanäle für eine Kühlung der Einrichtung selbst und für die Zuführung der Kühlflüssigkeit zum Werkstück und in das Werkstück vorgesehen so dass die Einstellung des Werkstücks auf der Palette von Kühleinrichtungen wie Schläuchen, Anschlüssen und dergleichen nicht behindert wird.

Nachstehend werden Ausführungsbeispiele der erfindungsgemässen Erfindung anhand der beiligenden Zeichnungen näher erläutert. Es zeigen:

Fig. 1 perspektivisch die vorliegende Einrichtung, die ein Paletten-Voreinstellgefüge mit einer Palette für den Gegenstand aufweist,

Fig. 2 perspektivisch eine Seitenpartie des genannten Gefüges,

Fig. 3 perspektivisch die Einrichtung gemäss Fig. 1, bei der nur die oberste Platte des Gefüges hochgeklappt ist,

Fig. 4 perspecktivisch die Einrichtung gemäs Fig. 1, ber der sich alle drei Platten des Gefüges in einer Winkellage zueinander befinden,

Fig. 5 in einer Seitenansicht eine Eckpartie der Einrichtung nach Fig. 1, die ein Scharnier aufweist,

Fig. 6 in einem vertikalen Schnitt I—I jene Endpartie des Plattengefüges, die die Scharniere nach Fig. 4 aufweist,

Fig. 7 perspektivisch die Palette aus Fig. 1 die sich im Arbeitsbereich einer Bearbeitungsmaschine befindet,

Fig. 8 in Frontansicht einen Balken mit Furchen und Kanälen, auf dem die Palette nach Fig. 7 sitzt,

Fig. 9 in Draufsicht den Balken nach Fig. 8,

Fig. 10 in einem Querschnitt eine weitere Ausführungsform der Palette nach Fig. 1,

Fig. 11 in einer Ansicht die Palette nach Fig. 10,

Fig. 12 perspektivisch die zuoberst liegende Platte des Voreinstellgefüges, bei der alle vier Seitenflächen mit Furchen versehen sind,

Fig. 13 perspektivisch eine Palette, die mit Oeffnungen für die Aufnahme des Schaftes mehrerer Haltevorrichtungen versehen ist,

Fig. 14 in Ansicht den Arbeitsbereich einer Bearbeitungsmaschine, in dem sich ein weiteres Ausführungsbeispiel der Halterung für einen Gegenstand befindet,

Fig. 15 perspektivisch eine weitere Ausführungsform der vorliegenden Einrichtung,

Fig. 16 in einer Seitenansicht eine noch weitere Ausführungsform der vorliegenden Einrichtung,

Fig. 17 die Einrichtung gemäss Fig. 16, bei der die Palette um 90 Grad gedreht ist und

Fig. 18 eine rückwärtige Ansicht der Einrichtung nach Fig. 16.

Die Einrichtung zur Halterung eines Gegenstandes in einer räumlichen Lage weist ein Paletten-Voreinstellgefüge 1 auf, das sich auf einem Voreinstellplatz 2 für eine Bearbeitungsmaschine befindet. Es kann sich um eine Maschine handeln, die das Werkstück durch Elektroerosion spanabhebend, usw. bearbeitet.

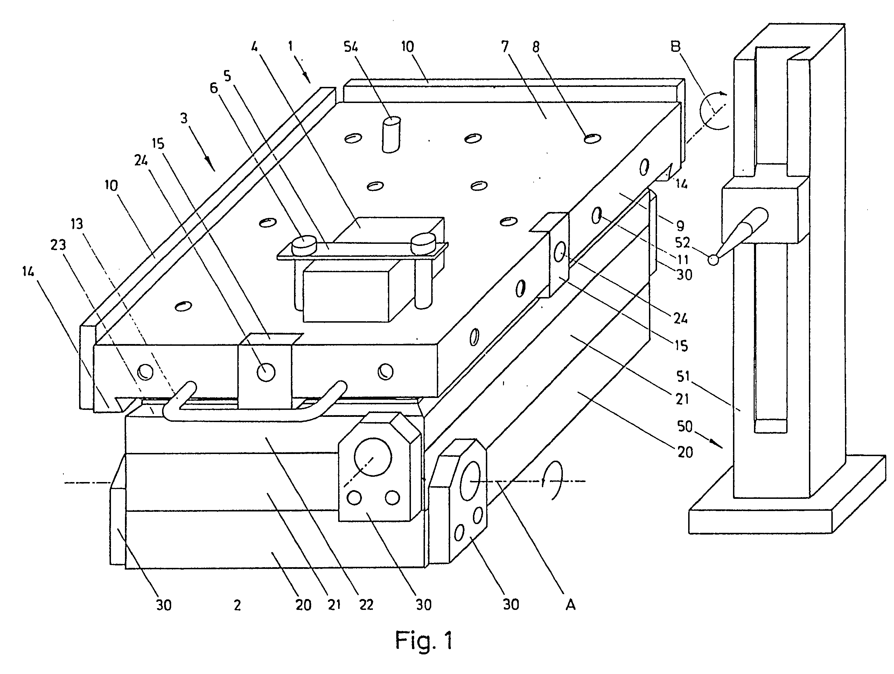

Im Voreinstellgefügt 1 befindet sich eine Palette 3, auf der das Werkstück 4 befestigt sein kann. Das Werkstück 4 ist in Fig. 1 nur schematisch dargestellt. Dieses kann beispielsweise mit Hilfe einer auf diesem aufliegenden Spannvorrichtung 5 befestigt sein, durch welche Schrauben 6 hindurchgehen. In der oberen Hauptfläche des Palettenkörpers 7 sind Gewindeöffnungen 8 ausgeführt, in welchen die Schrauben 6 eingeschraubt sind.

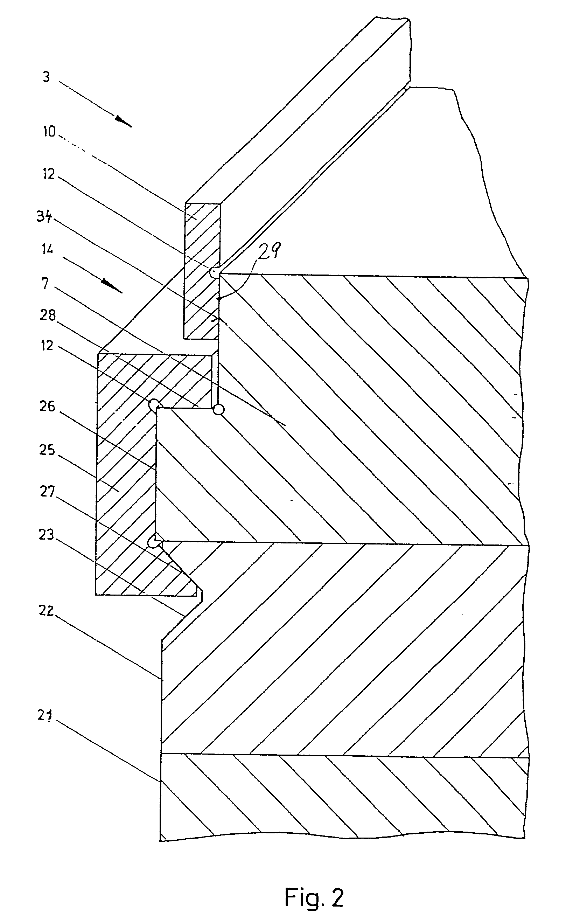

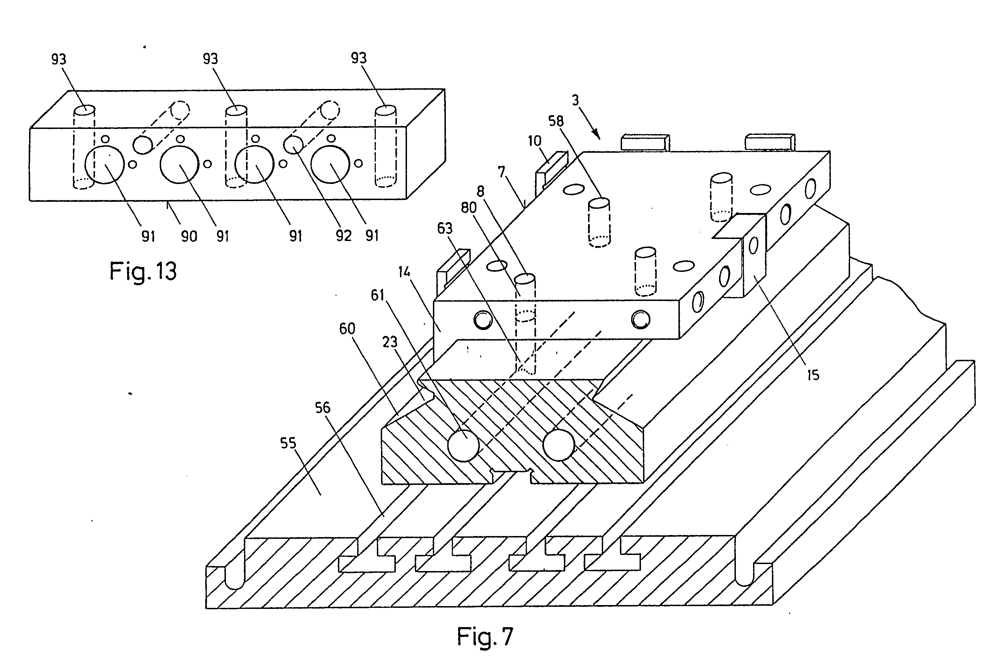

Zwei der Seitenflächen 9 des Palettenkörpers 7 sind mit Anschlägen 10 für Werkstücke 4 versehen. Diese Anschläge 10 sind als Leisten ausgeführt und sie sind mit Hilfe von Schrauben (nicht dargestellt) am Palettenkörper 7 befestigt. Die genannten Schrauben sind in Gewindeöffnungen 11 eingeschraubt, die in den Seitenflächen 9 des Palettenkörpers 7 ausgeführt sind. Wie aus Fig. 2 ersichtlich ist, kann die Innenseite der Anschlagsleiste 10 mit einem Freistich 12 versehen sein, in welchem ein allfälliger Grat am Werkstück Platz finden kann. Die Anschläge 10 können jedoch aus als kurze Anschlagsstücke ausgeführt sein, wie dies aus Fig. 7 ersichtlich ist.

Zwei Seitenflächen 9 des Palettenkörpers 7 sind mit Handgriffen 13 versehen, die die Handhabung der Palette 3 erleichtern. Die Randpartien des Palettenkörpers 7 sind mit Mitteln 14 und 15 versehen, die die Befestigung der Palette 3 auf dem Plattengefüge 1 ermöglichen. Diese Mittel 14 und 15 werden im Nachstehenden noch näher beschrieben werden.

Das Voreinstellgefüge 1 enthält eine Grundplatte 20, die auf dem Voreinstellplatz 2 aufgestellt ist. Auf der Grundplatte 20 liegt eine zweite Platte 21, die im dargestellten Beispiel auch als Mittelplatte bezeichnet werden kann. Es ist nämlich möglich, dass das Voreinstellgefüge 1 lediglich die Grundplatte 20 und eine darauf liegende Platte aufweist. Auf der zweiten Platten 21 (Fig. 1) liegt dann eine dritte Platte 22, deren obere Randpartie mit Furchen 23 versehen ist. Diese Furchen 23 sind im oberen Bereich aller vier Seitenwände der obersten Platte 22 ausgeführt.

Der linke und der hintere untere Rand der Palette 3 ist nach unten gezogen und die Innenseite eines solchen länglichen Vorsprunges 14 ist unterschnitten. Diese unterschnittene Fläche steht mit der oberen Flanke der jeweiligen Furche 23 in Eingriff. Der unterschnittene Vorsprung 14 bildet das erste der Mittel zur Befestigung der Palette 3 auf der dritten Platte 22. Dem jeweiligen unterschnittenen Vorsprung 14 ligt eine Bride 15 gegenüber, die das zweite Glied der genannten Befestigungsmittel für die Palette 3 bildet. Die jeweilige Bride 15 ist in der dem jeweiligen Vorsprung 14 gegenüberliegenden Randpartie der Palette 3 wegnehmbar eingelassen. Durch die Bride 15 geht eine Schraube 24 hindurch, die im Palettenkörper 7 eingeschraubt ist. Die sich unter dem Palettenkörper 7 befindliche Partie der Bride 15 ist ebenfalls unterschnitten, so dass die Bride 15 ebenfalls eine nach innen vorspringende Partie aufweist, die in einer der Furchen 23 der dritten Platte 22 liegen kann. Diese Art der Verbindung zweier Gegenstände ist beispielsweise aus der EP—A—0 116 260 (Stand der Technik gemäß Art. 54(B) EPÜ) desselben Anmelders bekannt, wobei eine oder mehrere Briden 15 dabei verwendet werden.

Um die Palette 3 auf dem Plattengefüge 1 befestigen zu können, muss der Palettenkörper 7 nach Fig. 1 die unten abstehenden Randpartien 14 aufweisen. Einfacher wäre es, wenn der Plattenkörper/eine bloss plane Platte sein könnte. In Fig. 2 ist eine weitere Ausführungsform des ersten Befestigungsmittels 14 für die Palette 3 dargestellt, das ermöglicht, zur Anfertigung des Palettenkörpers 7 eine Platte ohne den unteren Vorsprung zu benützen. An der Seitenfläche 9 des Palettenkörpers 7 ist eine Leiste 25 angebracht, die die Uebergangsstelle zwischen dem Palettenkörper 7 und der oberen Platte 22 überdeckt. In dieser Leiste 25 ist eine längliche Vertiefung 26 ausgeführt, bei der die untere bzw. linke Seitenwand 27 schräg nach innen verläuft. Diese schräge Seitenwand 27 der in der beschriebenen Weise an der oberen Platte 22 befestigten Leiste 25 bildet die unterschnittene, vorstehende Partie des Befestigungsmittels 14, die mit der oberen Flanke der Furche 23 in Eingriff steht.

Die Leiste 25 kann mit Hilfe von Schrauben (nicht dargestellt) am Palettenkörper 22 befestigt sein. Im dargestellten Beispiel ist der obere Abschnitt der Randpartie des Palettenkörpers 7 mit einem Absatz 34 versehen und mit der horizontalen Flanke 28 dieses Absatzes 34 steht die zweite Seitenwand der Vertiefung 26 in der Verbindungsleiste 25 in Eingriff. An der vertikalen Flanke 29 des genannten Absatzes 34 ist die Anschlagsleiste 10 in bereits beschriebener Weise mit Hilfe von Schrauben befestigt. Hierdurch erreicht man, dass die Anschlagsleiste 10 in der Palette 3 eingelassen ist und keine Kollision dieser mit anderen Gegenständen erfolgen kann. Die Eckpartien des Absatzes 27 und der Vertiefung 26 sind ebenfalls mit Freistichen 12 versehen.

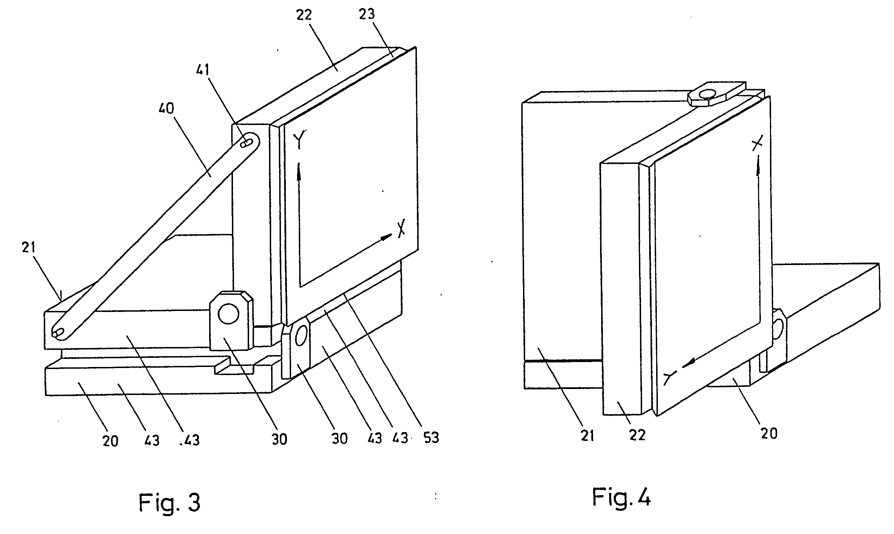

Wie aus Fig. 1 ersichtlich ist, ist die zweite Platte 21 mit der Grundplatte 20 sowie mit der oberen Platte 22 mit Hilfe von Scharnieren 30 verbunden. Dies ermöglicht, dass diese drei Platten 20 bis 22 unter einem Winkel auch verschieden von Null zueinander stehen können. Solche Lagen der Platten 20 bis 22 sind in den Fig. 3 und 4 dargestellt. Gemäss Fig. 3 liegt die zweite Platte 21 auf der Grundplatte 20, während die dritte Platte 22 unter einem Winkel Alpha von etwa 90 Grad zur zweiten Platte 21 steht. Damit die aufgeklappte Platte 22 nicht zurückklappen kann, ist eine Verbindungslasche 40 oder eine sonstige Klemmvorrichtung vorgesehen. Die Endpartien der Verbindungslasche 40 sind mit je einem Stift 41 versehen, die in entsprechende Oeffnungen in den Seitenwänden 43 der Platten 21 und 22 eigesteckt werden können. Der Abstand dieser Oeffnungen von der Drehachse der Scharniere 30 ist so gewählt, dass bei einem gegebenen Abstand der Stifte 41 und 42 der Verbindungslasche 40 voneinander die Platten 21 bzw. 22 den gewünschten Winkel Alpha, beispielsweise von 90 Grad, schliessen.

In Fig. 1 ist ferner eine vertikale Messäule 50 angedeutet, die auf dem Voreinstellplatz 2 aufgestellt ist. Es kann sich um eine handelsübliche Messäule handeln, die auf dem Arbeitstisch einer Bearbeitungsmaschine oder eines Voreinstellplatzes aufgestellt wird und die zu einer genauen Einstellung des Abstandes zwischen dem Tisch 2 und einem bestimmten Punkt an einem Werkstück, Werkzeug, usw. dient. Solche vertikalen Messäulen sind verhältnismässig günstig zu erstehen. Sie lasse sich auf dem Tisch 2 leicht bewegen. Die Messäule weist einen von Messäulenkörper 51 seitliche abstehenden Messtaster 52, dessen Höhe sich, wie gewünscht, einstellen, lässt. An einer geeigneten Stelle, wie z.B. in einer der Ecken der Palette 3, ist diese mit einem zylinderförmigen Stift 54 versehen. Die Mantelfläche dieses Stiftes 54 dient als die Referenzfläche für den Messtaster 52 auf dem Voreinstellplatz und für das Werkzeug in der Bearbeitungsmaschine.

Der Einfachheit halber ist in den Fig. 3 und 4 die Palette 3 weggelassen worden, deren Befestigungsmittel 14 und 15 mit den Furchen 23 in der oberen Platte 22 in Eingriff stehen und somit die Palette 3 in gleich geneigter Lage, wie sie die obere Platte aufweist, halten. Das was im nachstehenden in bezug auf die obere Platte 22 gesagt wird, gilt somit auch für die Palette 3. In der oberen Hauptfläche der oberen Platte 22 sind rechtwinklig zueinander stehende Achsen X und Q eingezeichnet. Diese Achsen X und Y bezeichnen die zwei Hauptrichtungen in einer horizontalen Ebene, und in bezug auf diese Achsen werden die Koordinaten der einzelnen Punkte eines Werkstückes in einer horizontalen Ebene abgelesen und bestimmt. Wenn sich die obere Platte 22 in der hochgeklappten und in Fig. 3 dargestellten Lage befindet, dann liegt die Achse X weiterhin in einer horizontalen Lage. Die Achse Y verläuft dagegen vertikal. Wenn man einen Punkt des Werkstückes 4 an eine ganz bestimmte Stelle in der Y-Richtung bringen will, dann stellt man diesen Abstand unter einer angemessenen Zugabe betreffend den Abstand der unteren Kante 53 der Platte 22 bzw. der Palette 3 von Voreinstellplatz 2 zwischen dem Messtaster 52 und dem Tisch des Voreinstellplatzes 2 ein. Danach bringt man den Messtaster 52 in die Nähe des Werkstückes 4 und bewegt dieses in der Y-Richtung so lange, bis der gewünschte Punkt des Werkstückes sich an der Spitze des Messtasters befindet. In dieser Lage wird das Werkstück fixiert.

Damit man mit Hilfe der vertikalen Messäule 50 die Lage des Werkstückes 4 auch in der zweiten Richtung X einer horizontalen Ebene einstellen kann, klappt man den aus der oberen Platte 22 in hochgeklappter Lage und der mittleren Platte 21 bestehenden Verbund nach links, sie dies in Fig. 4 dargestellt ist. In Der Hauptfläche der oberen Platte 22 ist das Koordinatensystem X—Y ebenfalls eingezeichnet. Man sieht hieraus, dass nach der Umklappung des Plattenverbundes 21 und 22 die X-Achse nun vertikal verläuft. Jetzt kann man somit mit Hilfe der vertikalen Messäule 50 die Lage eines bestimmten Punktes des Werkstückes 4 auch in der X-Richtung in der vorstehend beschriebenen Weise einstellen. Hiernach können die beiden Platten 21 und 22 zurückgeklappt werden. Die Palette 3 mit dem Werkstück 4 wird durch das Lösen der Befestigungsmittel 14 und 15 von der oberen Platte 22 weggenommen und in den Arbeitsbereich einer Bearbeitungsmaschine gebracht.

Es versteht sich, dass mit Hilfe der Messäule 50 auch die Höhenlage eines Punktes des Werkstückes 4 eingestellt werden, wenn sich dieses in seiner horizontalen Lage befindet, d.h. wenn sich die Achsen X und Y in einer horizontalen Ebene befinden.

Aus Fig. 1 ist ersichtlich, dass die Grundplatte 20 über ein erstes Paar von Scharnieren 30 mit der mittleren Platte 21 verbunden ist, wobei dieses Scharnierpaar eine Achse A aufweist. Die obere Platte 22 ist mit Hilfe eines weiteren Paares von Scharnieren 30 an die mittlere Platte 21 angeschlossen, wobei die Achse B dieses Scharnierpaares unter einem rechten Winkel zur Achse A des erst genannten Scharnierpaares steht. Eine solche Verbindung der Platten 20 bis 22 untereinander ermöglicht die in Fig. 4 dargestellte Lage dieser Platten zueinander.

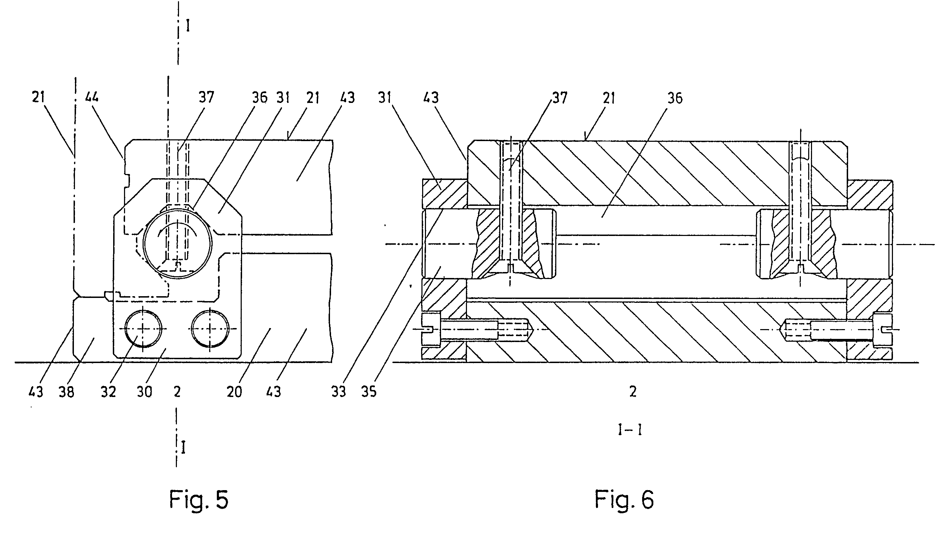

In den Fig. 5 und 6 ist eine Eckpartie des Paletten-Voreinstellgefüges 1 dargestellt, in der sich ein der Scharniere befindet. Das Scharnier 30 enthält eine Scharnierplatte 31, die mit Hilfe von Schrauben 32 an einer der Seitenwände 43 der Grundplatte 20 befestigt ist. Im oberen Bereich der Scharnierplatte 31 ist eine Hohrung 33 ausgeführt, in der sich die Endpartie eines Bolzens 35 befindet. In der Unterseite der anliegenden Randpartie der zweiten Platte 21 ist eine im Querschnitt dachförmige Ausnehmung 36 ausgeführt, in der der übrige Teil des jeweiligen Bolzens 35 liegt. Dieser Teil der Bolzen 35 liegt auf den geradlinig verlaufenden Schenkeln dieser Ausnehmung 36 auf und die Bolzen 35 sind mit Hilfe von Schrauben 37 an Ort und Stelle gehalten, die in der zweiten Platte 21 eingeschraubt sind. Die übrigen Scharniere 30 in Fig. 1 sind in gleicher Weise ausgeführt, so dass jeweils die eine Platte zwei miteinander fluchtende und von den Seitenflächen derselben abstehende Bolzen 35 aufweist. Diese Bolzen 35 bilden die erste Hälfte des Scharniers 30. Die mit einer solchen Platte gekoppelte Platte weist Scharnierplatten 31 auf, die an den gegenüberliegenden Seitenflächen dieser Platte befestigt sind und die zweite Hälfte des Scharniers 30 bilden.

Aus Fig. 5 ist ersichtlich, dass sich die jeweilige Scharnierplatte 31 in einem Abstand von jener Seitenflächen 43 der Grundplatte 20 befindet, die parallel zur Achse A des hier angebrachten Scharnierpaares verläuft. Die die Scharnierplatten 31 überstehende Randpartie 38 der Platte 20 bildet einen Anschlag, auf dem die Seitenfläche 44 der darüber liegenden Platte 21 ruht, wenn sich diese Platte 21 in ihrer hochgeklappten Lage (strichpunktiert angedeutet) befindet.

In Fig. 7 ist ein Maschinentisch 55 mit T-Nuten 56 dargestellt, auf dem ein Grundkörper 60 in bekannter Weise befestigt ist. Dieser Grundkörper 60 ist länglich ausgeführt und seine obere Randpartie weist die bereits beschriebenen Fürchen 23 auf. Auf diesem Furchenkörper 60 befindet sich die Palette 3, die im Zusammenhang mit Fig. 1 beschrieben werden ist und die mit Hilfe des Befestigungsmittel 14 und 15 auf dem Furchenkörper gehalten ist. Die Oeffnungen 8, die im Zusammenhang mit Fig. 1 bereits besprochen worden sind, sind durchgehend ausgeführt, so dass sie zwischen den zwei Hauptflächen des Palettenkörpers 7 sich erstreckende Kanäle 80 bilden.

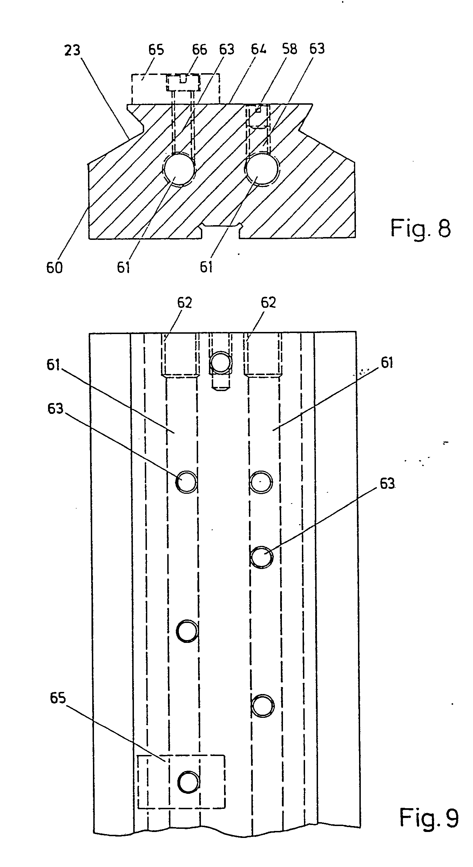

In Furchenkörper 60 sind in der Längsrichtung dieses verlaufende Hauptkanäle 61 ausgeführt, die in den Stirnflächen des Furchenkörpers 60 münden. Wie aus Fig. 9 ersichtlich ist, ist eine der Endpartien dieser Hauptkanäle 61 mit Gewinde 62 versehen, damit hier beispielsweise Schläuche (nicht dargestellt) zur Zuführung einer Kühl- bzw. Spülflüssigkeit angeschlossen werden können. An die Hauptkanäle 61 schliessen sich Verteilkanäle 63 an, die unter einem Winkel, beispielsweise von 90 Grad zu den Hauptkanälen 61 verlaufen. Diese Verteilkanäle 63 sind einerends an die Hauptkanäle 61 strömungsmässig angeschlossen und andernends münden sie in der Oberseite 64 des Furchenkörpers 60.

Die Palettenkanäle 80 sind an derartigen Stellen der Palette 3 ausgeführt, dass sich die Palettenkanäle 80 durch blosses Verschieben der Palette 3 entlang dem Furchenkörper 60 mit den Verteilkanälen 63 in diesem in Ausrichtung bringen lassen. Diese ermöglicht, die genannte Flüssigkeit durch die Palette 3 bis zum Werkstücke bzw. zum Werkzeug zuzuführen, wobei die Flüssigkeit von der oberen Mündung der Palettenkanäle 80 dann durch weitere Schläuche mit geeignetem Querschnitt und von erforderlicher Anzahl bis zur Arbeitsstelle geführt werden kann. Dies ist deswegen von grosser wirtschaflicher Bedeutung, weil man die Zuführungsschläuche usw. bereits auf dem Voreinstellplatz auf der Palette anbringen kann. Bisher musste nämlich die entsprechende Umsteckung der Zuführungsschläuche erst im Arbeitsbereich der Maschine durchgeführt werden, was unerwünschte Stillstandszeiten der Maschine zur Folge hatte. Mündungen 8 der Palettenkanäle 80, durch welche keine Flüssigkeit geführt werden soll und die sich trotzdem über einem der Verteilkanäle befinden, sind mit Stopfen 58 verschlossen.

Um die Uebereinstimmung der genannten Kanäle 63 und 80 möglichst leicht und schnell zu erreichen, kann an geeigneter Stelle des Furchenkörpers 60 ein Anschlag 65 angebracht sein, der mit Hilfe einer Schraube 66 an Ort und Stelle gehalten wird, die in einem der Verteilkanäle 63 eingeschraubt ist.

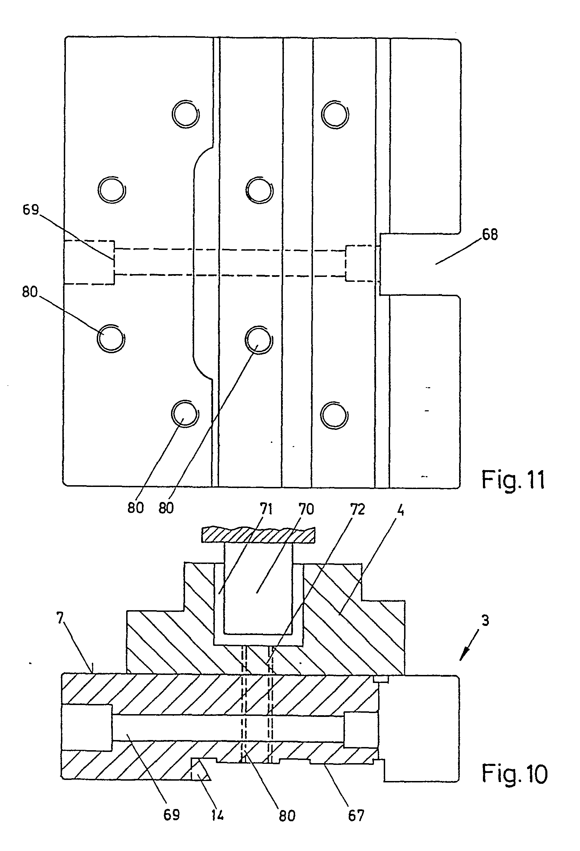

In den Fig. 10 und 11 ist eine verhältnismässig kleine Palette 3 dargestellt, auf der das Werkstück 4 befestigt ist. Die Unterseite der Palette 3 ist mit einer Rille 67 ausgeführt, bei der die eine Seitenwand derselben so unterschnitten ist, dass sie das erste Befestigungsmittel 14 für die Palette 3 darstellt. Die Bride 15, die das zweite Befestigungsmittel darstellt, ist normalerweise in jener Ausnehmung 68 des Palettenkörpers 7 angeordnet, die in Fig. 11 mit 68 bezeichnet ist. Die Schraube 24, die die Bride 15 in dieser Ausnehmung 68 hält, ist einem Querloch 69 eingeschraubt, das im Palettenkörper 7 ausgeführt ist. Die Palette 3 weist mehrere durchgehende Kanäle 80 auf, die, wie bereits beschrieben worden ist, mit den Verteilkanälen 63 in Uebereinstimmung gebracht werden können.

Etwa in der Mitte des Werkstückes 4 ist eine Vertiefung angedeutet, in der sich das Werkzeug 70 biespielsweise einer Elektroerosionsmaschine befindet. Eine solche Bearbeitung erfolgt unter der Zuführung einer Spühlflüssigkeit. Um diese in den Spalt 71 zwischen dem Werkstück 4 und Werkzeug 70 zuführen zu können, ist das Werkstück unten mit einer durchgehenden Bohrung 72 versehen, deren Achse mit der Achse des Palettenkanals 80 übereinstimmt. Die Flüssigkeit kann dann direkt und einfach durch den Palettenkanal 80 und die Bohrung 72 in die Bearbeitungszone eingeführt werden.

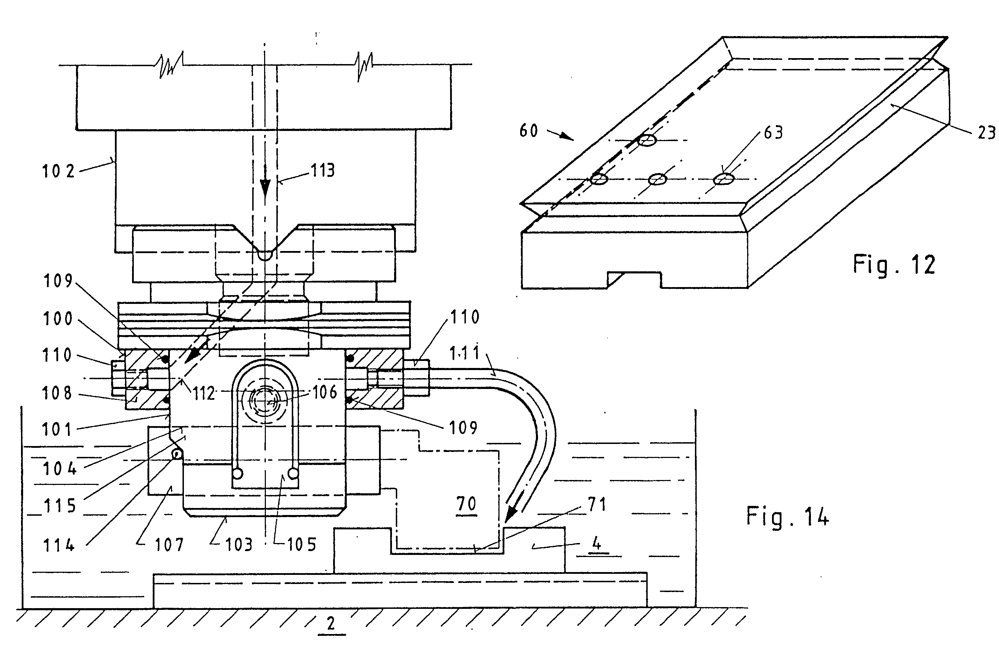

In Fig. 12 ist ein Grundkörper 60 dargestellt, der plattenförmig ist. Ansonsten ist dieser Grundkörper 60 auch mit den Furchen 23 und mit den Kanälen versehen, von welchen hier nur die Mündungen einiger der Verteilkanäle 63 eingezeichnet sind.

Gemäss Fig. 13 ist ein Grundkörper 90 mit mehreren nebeneinander liegenden Bohrungen 91 versehen. In jedem dieser Bohrungen 91 kann der Schaft eines Halters für einen Gegenstand eingesteckt werden. Mit Hilfe eines solchen Grundkörpers 90 kann man in der Bearbeitungszone einer Maschine mehrere Gegenstände gleichzeitig halten. Der Grundkörper 90 ist mit noch weiteren Bohrungen 92 und 93 versehen, durch welche Befestigungsschrauben für den Grundkörper 90 hindurchgehen können.

Die Belieferung des Spaltes 71 zwischen dem Werkstück 4 und dem Werkzeug 70 kann auch mit Hilfe einer Spühlvorrichtung 100 erfolgen, die am Werkzeughalter 101 angebracht ist (Fig. 14). Der Werkzeughalter 101 ist am Kopf 102 einer Bearbeitungsmaschine auswechselbar befestigt. Der Werkzeughalter 101 enthält einen Block 103, der an den Maschinenkopf 102 angeschlossen ist. Vorwiegend im unteren Teil dieses Blocks 103 ist eine horizontal verlaufende Oeffnung 104 ausgeführt, die sich über die ganze Breite des Blocks 103 erstreckt. In der Vorderwand des Blockes 103 ist eine Zunge 105 herausgeschnitten, die sich über fast die ganze Höhe des Blockes 103 erstreckt. Durch die Spitze dieser Zunge 105, die sich in der oberen Hälfte des Blockes 103 befindet, geht eine Schraube 106 hindurch, die im Material des Blockes 103 eingeschraubt ist. In der genannten Oeffnung 104 befindet sich ein Schaft 107, an dem das Werkzeug 70 befestigt ist. Beim Anziehen der Schraube 106 wird der Schaft 107 in der Oeffnung 104 festgeklemmt und dadurch wird das Werkzeug in einer gewünschten Lage fixiert. Zu einer schnellen und genauen Einstellung der Lage des Schafftes 107 im Block 103 dient ein Anschlagsstift 114, der auf einen entsprechenden Vorsprung 115 am Block 103 aufliegt.

An der oberen Hälfte des Blockes 103 ist ein hohler Ring 108 angebracht, der im dargestellten Beispiel einen C-förmigen Querschnitt aufweist. Die offene Seite dieses Ringes 108 liegt auf der Aussenseite des Blockes 103 dicht auf. Zu diesem Zweck liegen zwischen dem Ring 108 und dem Block 103 Dichtungsringe 109. An der Aussenseite des Ringes 108 sind Anschlussnippel 110 für Schläuche 111 angebracht. Im Inneren des Blockes 103 ist ein Kanal 112 ausgeführt, der einerseits in das Innere des Ringes 108 und andererseits in die Anschlusstelle des Werkzeughalters 101 an den Maschinenkopf 102 mündet. Im Maschinenkopf 102 ist ein weiterer Kanal 113 ausgeführt, durch welchen die Flüssigkeit, die für die Bearbeitung des Werkzeuges erforderlich ist, zugeführt wird.

Die genannte Flüssigkeit fliesst vom Zuführungskanal 113 durch den Verbindungskanal 112 in das Innere des Ringes 108. Hier verteilt sich die Flüssigkeit entlang dem ganzen Umfang des Blokkes 103. Die Anschlussnippel 110 sind normalerweise geschlossen. Wo es jedoch erforderlich ist, dort ist an den entsprechenden Nippel der Schlauch 111 angeschlossen und die Flüssigkeit kann hier aus dem Ring herausgeführt und an die gewünschte Stelle des Werkstückes 4 geführt werden.

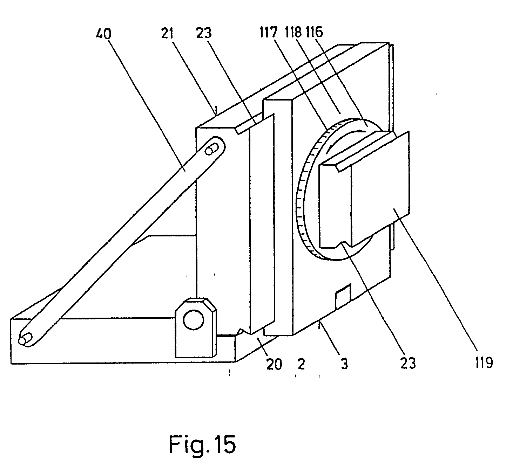

In Fig. 15 ist eine weitere Ausführungsform der vorliegenden Einrichtung dargestellt. Diese Einrichtung enthält die hier bereits besprochene Grundplatte 20 sowie die daran anscharnierte Platte 21, die im dargestellten Beispiel sich in ihrer vertikalen Stellung befindet. Diese zweite Platte 21 ist mit den bereits besprochenen Furchen 23 versehen, so dass auf dieser Platte 21 die Palette 3 befestigt werden kann. In der Palette 3 ist ein Drehtisch 116 drehbar gelagert, wobei die Umfangspartie dieses mit einer Teilung 117 versehen ist, der eine oder mehrere Marken 118 auf der Palette 3 zugeordnet sind—Teilapparat. Auf dem Drehtisch 116 kann das Werkstück in einer bekannten Weise befestigt sein. Auf dem Drehtisch 116 kann jedoch auch eine weitere Platte 119 befestigt sein, deren Seitenflächen mit den hier bereits besprochenen Furchen 23 versehen sind. Zur Halterung des Werkstückes kann eine Palette verwendet werden, die mit den hier ebenfalls bereits besprochenen Mitteln zum Eingreifen in die Furchen 23 ausgerüstet ist.

Wenn die zweite Platte sich in der hochgeklappten Lage befindet und wenn ein Werkstück auf dem Drehtisch 116 befestigt ist, dann kann das Werkstück nacheinander in z.B. um 90 Grad zueinander verschobene Lagen durch das Drehen des Tisches 116 gebracht werden. In diesen Lagen kann des Werkstück in der Richtung X und Y ausgemessen bzw. eingestellt werden. Hierbei kann man auch eine bestimmte Winkellage des Werkstückes ausmessen und einstellen, die von der horizontalen oder vertikalen Lage verschieden ist.

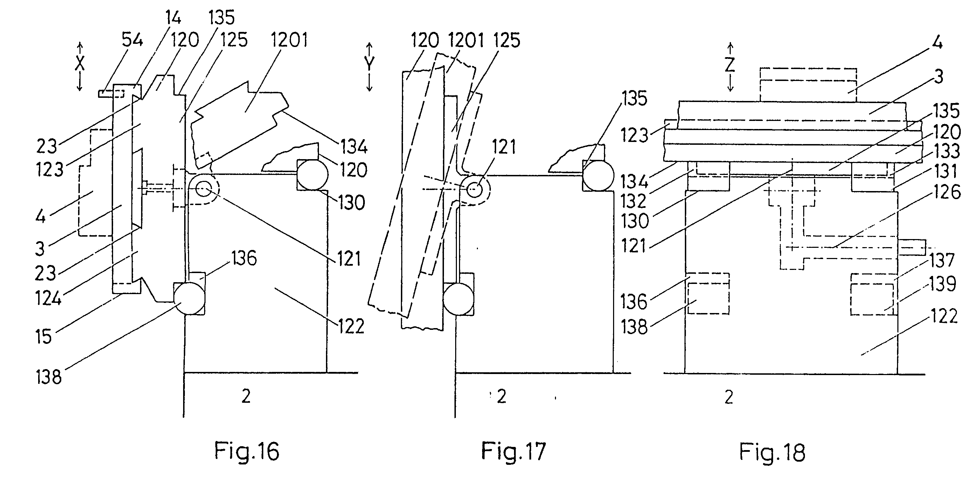

In den Fig. 16 bis 18 ist ein noch weitere Ausführungsform der vorliegenden Einrichtung dargestellt. Das Paletten-Voreinstellgefüge 1 weist in diesem Fall einen Grundkörper 120 auf, der über ein Drehgelenk 121 mit einem Tragkörper 122 verbunden ist, wobei dieser Tragkörper 122 auf dem Tisch 2 aufgestellt ist. Das Drehgelenk 121 kann von einer allgemein bekannten Art sein und deswegen wird dieses hier nicht näher beschrieben.

Der Grundkörper 120 ist länglich ausgebildet, wie dies vor allem aus den Fig. 17 und 18 ersichtlich ist. Die Oberseite des Grundkörpers 120 weist zwei längliche und parallel zueinander verlaufende Vorsprünge 123 und 124 auf, deren Seitenwände mit bereits beschriebenen Furchen 23 versehen sind. Auf jedem der so ausgebildeten Vorsprünge 123 bzw. 124 kann wenigstens eine Palette 3 aufgesetzt sein. Im dargestellten Beispiel sitzt auf dem Grundkörper 120 jedoch nur eine einzige Palette 3, die dagegen so breit ist, dass sie die beiden Vorsprünge 123 und 124 überspannt. Die Randpartien dieser Palette 3 sind mit den bereits beschriebenen Greifelementen 14 und 15 (Fig. 16) versehen, die mit den äusseren Furchen 23 in den Vorsprüngen 123 und 124 des Grundkörpers 120 in Eingriff stehen. Auf der Oberseite der Palette 3 ist das Werkstück 4 in bekannter Weise befestigt. Von der Palette 3 steht der zylindrische Stift 54 ab, der den Ausgangspunkt für die Bearbeitung des jeweiligen Werkstückes 4 angibt.

Von der Unterseite des Grundkörpers 120 steht ein Ansatz 125 ab, dessen Grundfläche quadratisch ist. Entlang dem länglichen Grundkörper 120 können sich an diesen mehrere quadratische Ansäzte 125 anschliessen, so dass verschiedene Stellen des Grundkörpers 120 mit dem Tragkörper 122 gekoppelt werden können. Der Tragkörper 122 ist als ein Quader geformt, der auf dem Tisch 2 bzw. 55, im dargestellten Beispiel hochstehend, angeordnet ist. Eine der Kantenpartien dieses Quaders 122 ist mit dem bereits genannten Drehgelenk 121 versehen. Dieses Drehgelenkt 121 ist mit einer Arretiervorrichtung 126 versehen, die, weil bekannt, in der Zeichnung (Fig. 18) nur schematisch angedeutet ist. Die andere Endpartie des Gelenkes 121 ist in der Mitte des Ansatzes 125 am Grundkörper 120 drehbar befestigt. Der Grundkörper 120 kann um das Gelenk 121 nicht nur geschwenkt sondern auch gedreht werden, wie dies vor allem in Fig. 17 angedeutet ist, wo der Grundkörper 120 nur schematisch dargestellt ist. Der Grundkörper 120 kann einerseits eine vertikale und andererseits eine horizontale Lage einnehmen, wie dies in Fig. 16 angedeutet ist. Zudem kann der Grundkörper 120 noch dazwischen liegende Lagen einnehmen, in welchen dieser mit 1201 bezeichnet ist und in welchen dieser um das Gelenk 121 herum gedreht werden kann.

Die Oberseite des Quaders 122 ist mit sich in einem Abstand voneinander befindlichen Ausnehmungen 130 und 131 versehen, in welchen sich steife Körper 132 und 133 mit zylinderförmiger Oberfläche befinden. Diese Körper 132 und 133 sind mit Hilfe von Schrauben (nicht dargestellt) in den Ausnehmungen 130 und 131 gehalten und die dienen als Auflager für den Grundkörper 120. Mit der Unterseite 134 des Grundkörpers 120 bilden diese Auflagekörper 132 und 133 einen nur entlang einer Linie verlaufenden Kontakt. Der Abstand der genannten Auflagekörper 132 und 133 vom Zentrum des Drehgelenkes 121 ist so gewählt, dass die Seitenwand 135 des An- bzw. Fortsatzes 125 mit den Walzen 132 und 133 ebenfalls einen linienförmigen Kontakt bildet. Jene Seitenwand des Quaders 122, die zum Drehgelenk 121 näher liegt, ist mit Vertiefungen 136 und 137 versehen, in welchen sich weitere Auflagekörper 138 und 139 befinden. Diese stehen aus den Vertiefungen 136 und 137 hervor. Des Abstand dieser Auflagekörper 138 und 139 von Zentrum des Drehgelenkes 121 ist so gewählt, dass die Seitenwand 135 des An- bzw. Fortsatzes 125 mit den Walzen 138 und 139 einen linienförmigen Kontakt bildet.

Mit Hilfe der genannten Paare von Auflagekörpern 132 und 133 bzw. 138 und 139 ist die Position des Ansatzes 125 und somit auch des ganzen Grundkörpers 120 in der jeweiligen Endlage desselben eindeutig und genau definiert. Man kann das Drehgelenk 121 noch arretieren. Die Lage des Werkstückes 4 auf der Palette 3 kann nun in bezug auf den Stift 54 in der einen Richtung, beispielsweise in der X-Richtung, genau eingestellt werden und zwar durch ein blosses Verschieben desselben in der Vertikalrichtung. Dann wird die Arretierung des Drehgelenkes 121 aufgehoben und der Grundkörper 120 wird so geschwenkt (Fig. 17), dass der Ansatz 125 ausser Eingriff mit den tiefer liegenden Auflagekörpern 138 und 139 tritt. Der Grundkörper 1201 kann nun um 90 Grad um das Gelenk 121 gedreht werden, wonach der Ansatz 125 mit den unteren Walzen 138 und 139 wiederum in Eingriff gebracht wird. Jetzt ist auch das Werkstück 4 um 90 Grad gedreht und durch ein blosses Verschieben in der Vertikalrichtung kann die Lage des Werkstückes 4 in der Y-Richtung genau eingestellt werden. Es dürfte einleuchten, dass der Grundkörper 120 viermal um 90 Grad gedreht werden kann, weil der Ansatz 125 einen quadratischen Grundriss hat, wie dies bereits erläutert worden ist. Danach wird der Grundkörper 120 samt der Palette 3 und dem Werkstück 4 so geschwenkt, dass sich diese in horizontaler Lage befinden, wie dies in Fig. 18 dargestellt ist. Jetzt kann die Lage des Werkstückes 4, wenn erforderlich, noch in der Z-Richtung ausgemessen werden.

**Patentansprüche**

1. Einrichtung zur Halterung eines zu bearbeitenden Gegenstandes in einer räumlichen Lage, mit einer Palette (3) auf welcher der Gegenstand (4) befestigbar ist, wobei die Einrichtung ein Paletten-Voreinstellgefüge (1) aufweist, mit dessen Hilfe sich die Palette (3) samt dem Gegenstand (4) in eine gewünschte Lage bringen lässt, dadurch gekennzeichnet, dass die Palette (3) und das Paletten-Voreinstellgefüge (1) mit Kanälen zur Führung einer Flüssigkeit auf den Gegenstand (4) versehen sind, wobei die Mündungen der Kanäle (61, 63) des Paletten-Voreinstellgefüges (1) und die Mündungen (8) der Kanäle (80) der Palette (3) miteinander in Ausrichtung bringbar sind.

2. Einrichtung nach Anspruch 1, dadurch gekennzeichnet, dass das Paletten-Voreinstellgefüge (1) Platten (20, 21, 22) aufweist, die untereinander beispielsweise mit Hilfe von Scharnieren (30) verbunden und in eine Winkelage zueinander bringbar sind, dass eine dieser Platten (22) mit Furchen (23) versehen ist, und dass die Palette (3) Mittel (14, 15) zum Eingreifen in die Furchen (23) der genannten Platte (22) aufweist.

3. Einrichtung nach Anspruch 2, dadurch gekennzeichnet, dass eine der Platten (21) mit zwei miteinander fluchtenden Bolzen (35) versehen ist, die von zwei einander gegenüberliegenden Seitenflächen (43) der Platte (21) abstehen und eine Hälfte eines Scharniers (30) darstellen, dass die benachbarte Platte (20) an ihren Seitenflächen (43) mit daran befestigten Scharnierplatten (31) versehen ist, und dass die abstehenden Partien des Bolzens (35) sich in Oeffnungen (33) der Scharnierplatte (31) befinden.

4. Einrichtung nach Anspruch 2, dadurch gekennzeichnet, dass eine der Platten (20) des Paletten-Voreinstellgefüges als auf dem Tisch (2, 55) befestigbare Grundplatte ausgeführt ist, dass an diese Grundplatte (20) eine zweite Platte (21) anscharniert ist, die mit Furchen (23) zum Anbringen der Palette (3) an der zweiten Platte (21) versehen ist, und dass auf der Palette (3) ein gegebenenfalls mit einer Winkelteilung versehener Drehtisch (116) angebracht ist.

5. Einrichtung nach Anspruch 1, dadurch gekennzeichnet, dass das Paletten-Voreinstellgefüge (1) neben der Palette (3) einen auf dem Arbeitstisch (2, 55) befestigbaren, mit Furchen (23) versehenen Furchenkörper (60) umfasst, dass der Furchenkörper (60) plattenförmig oder balkenförmig ausgebildet und mit längs verlaufenden Hauptkanälen (61) versehen ist, dass sich an die Hauptkanäle (16) davon abgewinkelte Verteilkanäle (63) anschliessen, die in einer der Oberflächen des Furchenkörpers (60) münden, und dass die Mündung (8) der Kanäle (80) in der Palette (3) und die Mündung der Verteilkanäle (63) in der Furchenplatte (60) miteinander in Ausrichtung bringbar sind.

6. Einrichtung nach Anspruch 1, dadurch gekennzeichnet, dass das Paletten-Voreinstellgefüge (1) einen Tragkörper (122) aufweist, dass eine der Kantenpartien dieses Tragkörpers mit einem Drehgelenk (121) versehen ist, über das die Palette (3) mit dem Tragkörper (122) verbunden ist, und dass der Tragkörper (122) mit zylinderförmigen Gliedern (132, 133, 138, 139) zum Auflegen der Palette (3) versehen ist.

7. Einrichtung nach Anspruch 1, dadurch gekennzeichnet, dass die einen Halter (101) für ein Werkzeug (70) aufweist, der am Kopf (102) einer Bearbeitungsmaschine auswechselbar befestigt und von einem hohlen Ring (108) umgeben ist, und dass Spül- bzw. Kühlflüssigkeit aus dem Kopf (102) in das innere des Ringes (108) zuführbar ist.

8. Einrichtung nach Anspruch 7, dadurch gekennzeichnet, dass der Kopf (102) mit einem Zuführungskanal (113) für die genannte Flüssigkeit und der Halter (101) mit einem weiteren Kanal (112) versehen ist, dass der Zuführungskanal (113) in das eine Ende des weiteren Kanals mündet, während das andere Ende des weiteren Kanals (112) in den Hohlraum des Ringes (108) mündet, und dass an der Aussenseite des Ringes (108) Nippel (110) zum Anschliessen von die Flüssigkeit dem Werkstück (4) zuführenden Schläuchen (111) angebracht sind.

9. Einrichtung nach Anspruch 1, dadurch gekennzeichnet, dass dem Paletten-Voreinstellgefüge (1) eine vertikale Messäule (50) zugeordnet ist.

10. Einrichtung nach Anspruch 1, dadurch gekennzeichnet, dass sie ein beispielsweise balkenförmig ausgebildetes Glied (90) umfasst, und dass eine der Oberflächen dieses Gliedes mindestens zwei Oeffnungen (91) zur Aufnahme des Schaftes eines weiteren Haltegliedes für ein Werkzeug (70) oder für ein Werkstück (4) aufweist.

## Revendications

1. Dispositif pour maintenir une pièce à usiner dans une position spatiale, comprenant une palette (3) sur laquelle la pièce (4) peut être fixée, ledit dispositif étant muni d'une structure (1) de préréglage de la palette, à l'aide de laquelle la palette (3) avec la pièce (4) peut être amenée dans une position voulue, caractérisé en ce que la palette (3) et la structure (1) de préréglage de la palette comportent des canaux pour guider un liquide sur la pièce (4), les embouchures des canaux (61, 63) de la structure (1) de préréglage de la palette et les embouchures (8) des canaux (80) de la palette (3) pouvant être alignées les unes par rapport aux autres.

2. Dispositif selon la revendication 1, caractérisé en ce que la structure (1) de préréglage de la palette comporte des plaques (20, 21, 22) reliées entre elles par exemple à l'aide de charnières (30) et pouvant être amenées dans une position angulaire, en ce que l'une des ces plaques (22) comporte des rainures (23), et en ce que la palette (3) présente des moyens (14, 15) s'engageant dans les rainures (23) de la plaque sus-mentionnée (22).

3. Dispositif selon la revendication 2, caractérisé en ce que l'une des plaques (21) comporte deux axes (35) alignés l'un par rapport à l'autre, qui font saillie des deux faces latérales opposées (43) de la plaque (21) et représentent une moitié d'une charnière (30), en ce que la plaque contigue (20) est munie sur ses faces latérales (43) de plaques charnières (31) qui y sont fixées, et en ce que les parties saillantes de l'axe (35) de trouvent dans des ouvertures (33) de la plaque charnière (31).

4. Dispositif selon la revendication 2, caractérisé en ce que l'une des plaques (20) de la structure de préréglage de la palette est réalisée en tant que plaque de base pouvant être fixée sur la table (2, 55), en ce que sur cette plaque de base (20) est fixée par charnière une deuxième plaque (21) comportant des rainures (23) pour fixer la palette (3) sur la deuxième plaque (21), et en ce que sur la palette (3) est fixée une table tournante (116) munie d'un dispositif de mesure angulaire.

5. Dispositif selon la revendication 1, caractérisé en ce que la structure (1) préréglage de la palette comprend à côte de la palette (3) un corps rainuré (60) comportant des rainures (23) pouvant être fixé sur la table de travail (2, 55), en ce que le corps rainuré (60) est réalisé en forme de plaque ou de poutre et comporte des canaux principaux (61) s'étendant dans le sens longitudinale, en ce qu'aux canaux principaux (61) sont reliés angulairement des canaux de distribution (63) débouchant dans une des surfaces du corps rainuré (60), et en ce que l'embouchure (8) des canaux (80) dans la palette (3) et l'embouchure des canaux de distribution (63) peuvent être alignées dans la plaque rainurée (60) l'une par rapport à l'autre.

6. Dispositif selon la revendication 1, caractérisé en ce que la structure (1) de préréglage de la palette comporte un corps porteur (122), en ce que l'une des parties d'arête de ce corps porteur est munie d'une articulation tournante (121) par laquelle la palette (3) est reliée au corps porteur (122), et en ce que le corps porteur (122) comporte des éléments cylindriques (132, 133, 138, 139) pour supporter la palette (3).

7. Dispositif selon la revendication 1, caractérisé en ce qu'il présente un porte-outil (101) pour un outil (70), ledit porte-outil étant fixé à la tête (102) d'une machine-outil de manière à pouvoir être échangé et étant entouré par un anneau creux (108), et en ce qu'un liquide de rinçage ou de refroidissement peut être amené de la tête (102) dans l'intérieur de l'anneau (108).

8. Dispositif selon la revendication 7, caractérisé en ce que la tête (102) présente un canal d'amenée (113) pour le liquide indiqué et que le porte-outil (101) comporte un canal supplémentaire (112), en ce que le canal d'amenée (113) débouche dans une extrémité du canal supplémentaire, tandis que l'autre extrémité du canal supplémentaire (112) débouche dans l'espace creux de l'anneau (108), et en ce que sur la face extérieure de l'anneau (108) sont prévus des raccords filetés (110) pour relier des tuyaux (111) conduisant le liquide à la pièce d'ouvrage (4).

9. Dispositif selon la revendication 1, caractérisé en ce qu'une colonne de mesure verticale (50) est associée à la structure (1) de préréglage de la palette.

10. Dispositif selon la revendication 1, caractérisé en ce que ce dernier comporte un élément (90) réalisé par exemple en forme de poutre, et en ce que l'une des surfaces de cet élément présente au moins deux ouvertures (91) pour recevoir la tige d'un autre porte-outil pour un outil (70) ou pour une pièce d'ouvrage (4).

## Claims

1. Apparatus for holding an object to be processed in a spatial position, having a pallet (3) on which the object (4) can be fastened, with the apparatus having a pallet pre-adjustment structure (1) with the help of which the pallet (3) together with the object (4) can be brought into a desired position, characterized in that the pallet (3) and the pallet pre-adjustment structure (1) are provided with channels to conduct a liquid onto the object (4), with the mouths of the channels (61, 63) of the pallet preadjustment structure (1) and the mouths (8) of the channels (80) of the pallet (3) being able to be brought into alignment with one another.

2. Apparatus according to claim 1, characterized in that the pallet pre-adjustment structure (1) has plates (20, 21, 22) which are connected to one another for example with the help of hinges (30) and can be brought into an angled position to one another, in that one of these plates (22) is provided with grooves (23), and in that the pallet (3) has means (14, 15) for engaging the grooves (23) of the said plate (22).

3. Apparatus according to claim 2, characterized in that one of the plates (21) is provided with two pins (35) in alignment with one another, which are distant from two side surfaces (43) of the plate (21) lying opposite one another and represent one half of a hinge (30), in that the adjacent plate (20) on its side surfaces (42) is provided with hinge plates (31) fastened thereon, and in that the distant sections of the pin (35) are located in openings (33) of the hinge plate (31).

4. Apparatus according to claim 2, characterized in that one of the plates (20) of the pallet preadjustment structure is constructed as base plate which can be fastened onto the table (2, 55), in that onto this base plate (20) there is hinged a second plate (21) which is provided with grooves (23) for the mounting of the pallet (3) on the second plate (21), and in that a rotary table (116), if necessary provided with an angled partition, is mounted on the pallet (3).

5. Apparatus according to claim 1, characterized in that the pallet pre-adjustment structure (1) in addition to the pallet (3) comprises a grooved body (60) which can be fastened on the work table (2, 55) and is provided with grooves (23), in that the grooved body (60) is constructed in a plate-shaped or bar-shaped manner and is provided with longitudinally extending main channels (61), in that onto the main channels (61) distribution channels (63) are attached which are bent therefrom and which open out into one of the surfaces of the grooved body (60), and in that the mouth (8) of the channels (80) in the pallet (3) and the mouth of the distribution channels (63) in the grooved plate (60) can be brought into alignment with one another.

6. Apparatus according to claim 1, characterized in that the pallet pre-adjustment structure (1) has a support body (122), in that one of the edge sections of this support body is provided with a rotary link (121) by means of which the pallet (3) is connected to the support body (122), and in that the support body (122) is provided with cylindrical elements (132, 133, 138, 139) for the mounting of the pallet (3).

7. Apparatus according to claim 1, characterized in that it has a holder (101) for a tool (70), which is fastened in an interchangeable manner on the head (102) of a processing machine and is surrounded by a hollow ring (108), and in that rinsing or cooling liquid can be supplied from the head (102) into the inside of the ring (108).

8. Apparatus according to claim 7, characterized in that the head (102) is provided with a supply channel (113) for the said liquid and the holder (101) is provided with a further channel (112), in that the supply channel (113) opens out into the one end of the further channel, while the other end of the further channel (112) opens out into the cavity of the ring (108), and in that nipples (110) are applied to the outer side of the ring (108) for the connection of tubes (111) supplying the liquid to the work piece (4).

9. Apparatus according to claim 1, characterized in that a vertical measuring column (50) is associated with the pallet pre-adjustment structure (1).

10. Apparatus according to claim 1, characterized in that it comprises an element (90) constructed for example in a bar-shaped manner, and in that one of the surfaces of this element has at least two openings (91) to receive the shaft of a further holding element for a tool (70) or for a work piece (4).

Fig. 1

Fig. 2

Fig. 4

Fig. 3

Fig. 5

Fig. 6

I–I

EP 0 154 607 B1

Fig. 13

Fig. 7

EP 0 154 607 B1

Fig. 8

Fig. 9

Fig. 11

Fig. 10

Fig. 12

Fig. 14

EP 0 154 607 B1

Fig.15

Fig.16

Fig.17

Fig.18

EP 0 154 607 B1